# EUROPEAN PATENT APPLICATION

(11) **EP 1 145 944 A1**
(43) Date of publication of application: **17.10.2001**
(21) Application number: 00967910.1
(22) Date of filing: 05.10.2000
(51) Int. Cl.: B62J 1/00

(54) **IMPROVED BICYCLE SADDLE**

(30) Priority: 08.10.1999 ES 9902226
(71) Applicant: Maragall Marfa, Juan, 08034 Barcelona (ES)
(72) Inventor: Maragall Marfa, Juan, 08034 Barcelona (ES)
(74) Representative: Flaccus, Rolf-Dieter, Dr.
(86) International application number: ES0000379
(87) International publication number: WO0126954

(57) **Abstract**

**IMPROVED BICYCLE SADDLE**

Improved bicycle saddle consisting of two anatomic supports (1) that are separated from one another and intended for receiving the buttocks (2) of the cyclist, said separation between the supports (1) being determined by a bridge (3) pointing downward and fixed with the aid of two platents (4) to the lower area of the corresponding supports (1) using conventional fixing means (5). The lower section of said bridge is fixed by means of the usual clamp (6) to the corresponding axle (7) that holds the saddle thereby making it possible the saddle in various positions.

## Description

### PURPOSE

The purpose of this request for Patent is an improved bicycle seat, which provides the function for which it intended with various advantages to be described later on, apart from others inherent to its organization and constitution.

### HISTORY

At present and as a reference to the state-of-the art, it should be mentioned that the actual bicycle seats are made of bodies consisting of a basically triangular-shaped part on which the buttocks and the intermediate zone of the rider rest.

### DESCRIPTION OF THE INVENTION

The improved bicycle seat, purpose of this invention, is characterized by the fact it consists of two anatomical separated supports which receive the respective buttocks of the cyclist, determining a play between supports. At the same time said supports are joined together at the bottom by means of a bridge pointing downwards to determine said play, the upper ends of which are joined through iron plates by means of conventional fastening elements to the respective lower zones of said supports.

Likewise, said bridge or joining link between supports is mounted on the lower part by means of the corresponding bracket on the pertaining axis that support the seat, permitting it to have a variety of positions.

Said supports can be cushioned or not and provide more comfort for the rider, especially in the case of cyclists who have undergone prostate surgery as there is no support that applies pressure to the area between buttocks.

In order to complement the description that follows and to help with a better understanding of its characteristics, attached to this descriptive report is a set of drawings in which the most significant details of the invention been represented in an illustrative and non-limiting way.

### BRIEF DESCRIPTION OF THE DRAWINGS

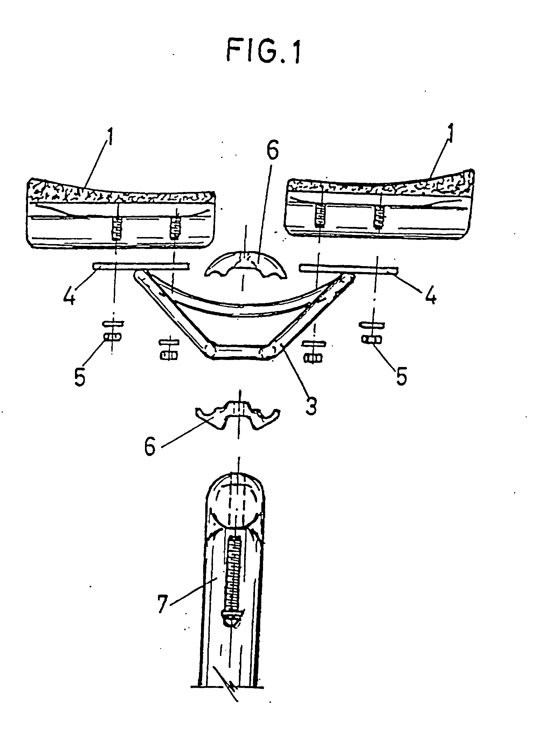

Figure 1 shows an elevation and part view of a performance of the invention.
Figure 2 shows an elevation view of the seat mounted for use.
Figure 3 shows a section in which the various positions the seat can take are shown.

### DESCRIPTION OF A PREFERRED PERFORMANCE OF THE INVENTION

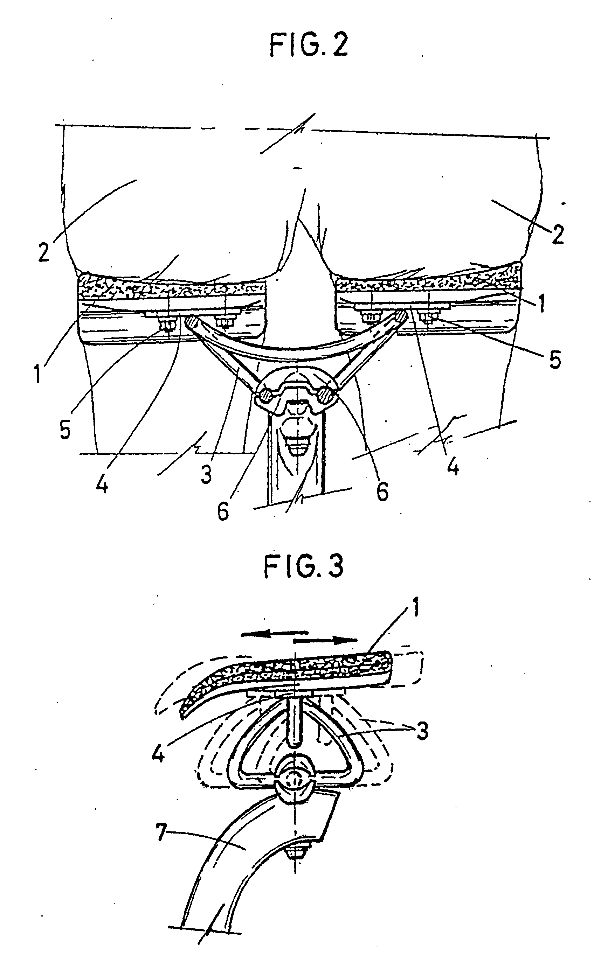

In view of the commented drawings and in accordance with numbering used, a performance example of the invention can be seen. This consists of an improved bicycle seat constituted by two anatomical and separated supports -1- that receive the respective buttocks -2- of the cyclist. Said separation or play between the supports is made by means of a lower link or bridge -3- joining with the downward-curved upper part to determine said gap, and which is fastened through its upper ends by means of iron plates -4- to the lower zone of each support -1- using conventional fastening elements -5-. The lower part of said bridge -3- is fastened by the usual bracket -6- to the corresponding axis -7- that secures the seat and provides various positions, as indicated in figure 3.

The mentioned supports -1- can be lined with conventional cushioned material.

## Claims

1. IMPROVED BICYCLE SEAT, **characterized by** the fact that it consists of two anatomical and separated supports (1) to receive the buttocks (2) of the cyclist. This separation between the supports (1) is made by a bridge (3) pointing downwards, which determines said separation, fastening said bridge through iron plates (4) to the lower zone of the respective supports (1) by means of conventional fastening elements (5). Fastening of the lower part of said bridge to the corresponding axis (7) that supports the seat is made by means of the usual bracket (6), thus providing various positions of the seat.

2. IMPROVED BICYCLE SEAT, according to the above claim, **characterized by** the fact that the mentioned supports can be lined with conventional cushioned material.
